# DEMANDE DE BREVET EUROPEEN

(11) **EP 1 605 699 A1**
(43) Date de publication de la demande: **14.12.2005**
(21) Numéro de dépôt: 05300316.6
(22) Date de dépôt: 25.04.2005
(51) Int. Cl.: H04N 7/167, H04N 5/00

(54) **Procédé de contrôle des conditions d'utilisation d'un décodeur**

(30) Priorité: 10.06.2004 FR 0451155
(71) Demandeur: Sagem SA, 75015 Paris (FR)
(72) Inventeur: Scandariato, Philippe, 95300 Pontoise (FR)
(74) Mandataire: Camus, Olivier Jean-Claude

(57) **Abrégé**

La présente invention a pour objet un procédé de contrôle des conditions d'utilisation d'un décodeur qui rend impossible l'usage d'un décodeur esclave (100') sans la présence, dans une même habitation, d'un décodeur maître (100). A cet effet, on propose dans l'invention que le décodeur esclave communique avec le décodeur maître, par l'intermédiaire de leur modem (116 ;116'), via une même ligne téléphonique (118), qui relie traditionnellement l'habitation dans laquelle sont installés les décodeurs au réseau RTC (117). Dans l'invention, un décodeur maître échange des informations de surveillance avec un ou plusieurs décodeurs esclaves pour garantir qu'ils sont connectés à la même ligne téléphonique, et qu'ils sont donc placés dans la même habitation.

## Description

### Domaine technique de l'invention

La présente invention a pour objet un procédé de contrôle des conditions d'utilisation d'un décodeur. Elle permet de définir et de contrôler des conditions particulières d'utilisation d'un décodeur esclave, c'est à dire d'un décodeur dont le fonctionnement dépend, au moins pour certaines de ses fonctionnalités, de la présence d'un autre décodeur, appelé décodeur maître.

Le domaine de l'invention est, d'une façon générale, celui de la télévision numérique. Dans ce domaine, on associe le plus souvent au téléviseur un décodeur de télévision numérique. Ce dernier offre la possibilité à un abonné de recevoir une multitude de programmes, ou services, de télévision. L'abonné a préalablement acheté ou loué le décodeur à un opérateur de télévision, ou à un intermédiaire, et a souscrit un abonnement qui lui permet de recevoir et visualiser un ensemble de services de télévision cryptés. Cet ensemble de services dépend de la nature de l'abonnement que l'utilisateur a choisi, et il n'inclut pas nécessairement tous les services de télévision disponibles chez l'opérateur choisi.

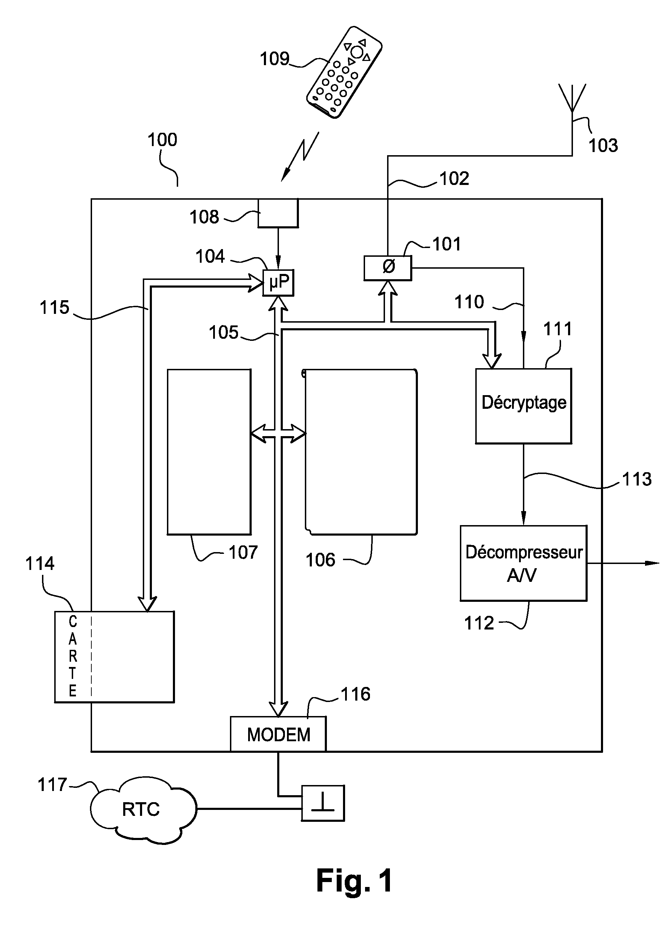

Un décodeur basique de l'état de la technique est représenté de façon schématique à la figure 1. Cette figure montre un décodeur 100 qui comporte un module de réception 101 d'un flux de signaux de télévision émis par un ou plusieurs opérateurs de télévision. Le module de réception 101 incorpore notamment des moyens de démultiplexage des différents signaux reçus dans le flux. Il peut, dans certains cas, également comporter des éléments compatibles avec un système de contrôle des éléments périphériques. Il est relié, au moyen d'un câble radio fréquence 102, dit câble RF, à des moyens de réception 103, symbolisés par une antenne. Dans la pratique, les moyens de réception 103 associés au décodeur 100 peuvent être un dispositif de réception terrestre, un dispositif de réception par câble, ou encore un dispositif de réception par satellite. Outre le câble RF, et le modem incorporé, le décodeur 100 dispose de différentes possibilités de raccordement, non représentées, avec son voisinage: on trouve notamment un câble secteur, un câble péritel...

Un microprocesseur 104 est relié au moyen d'un premier bus de communication bidirectionnel 105 à une mémoire de programmes 106, à une mémoire de données 107, à un module de décryptage 111, à un modem 116 et au module de réception 101. Le modem 116 permet au décodeur 100 d'être relié au réseau téléphonique commuté (RTC) 117, essentiellement pour avoir accès à des services interactifs. Le microprocesseur 104 indique au module de réception 101 notamment quel service de télévision il doit extraire du flux d'informations qu'il reçoit par les moyens de réception 103. Un capteur 108, dans cet exemple infrarouge, reçoit des signaux émis par une télécommande 109. Une cellule infrarouge du capteur 108 délivre un signal qui est transmis au microprocesseur 104. Les signaux numériques issus du module de réception 101 sont envoyés, via une première liaison unidirectionnelle 110 vers le module de décryptage 111. Les signaux, éventuellement décryptés sont ensuite transmis vers un décompresseur audio/vidéo 112 via une deuxième liaison unidirectionnelle 113.

La mémoire de données 107 est notamment destinée à mémoriser différentes informations, valeurs ou paramètres nécessaires au fonctionnement du décodeur. La mémoire de programmes 106 est notamment destinée à la gestion des différentes opérations à exécuter pour mettre en oeuvre différentes fonctionnalités du décodeur. Elle comporte plusieurs applications, et pourra notamment en contenir certaines qui seront dédiées à la mise en oeuvre du procédé selon l'invention. Ces applications seront détaillées par la suite . Dans d'autres exemples de réalisation du décodeur 100, ces applications pourraient être remplacées par des circuits électroniques spécifiques.

Le bus de communication bidirectionnel 105 véhicule des signaux de commande, d'adresse ou de données. Il s'agit d'une représentation fonctionnelle ; toutes les autres liaisons représentées sont, dans la pratique, des bus de données qui assurent des échanges de données entre deux éléments du décodeur décrit. Certaines de ces liaisons pourraient être intégrées dans le bus de communication bidirectionnel 105.

Dans le décodeur 100, on a prévu une ouverture pour introduire une carte 114, par exemple une carte de type carte à puce. Le décodeur est équipé d'une interface pour pouvoir échanger des informations avec la carte 114 via un deuxième bus de communication bidirectionnel 115. La carte 114 est un élément essentiel dans le fonctionnement de la gestion des droits d'accès aux services de télévision. A cet effet, une telle carte comporte notamment différentes mémoires contenant différentes clés de décryptage et un ensemble d'informations relatives à des droits d'accès. Le module de décryptage 111 reçoit des messages de décryptage depuis la carte 114 et via les différents bus de communication du décodeur 100 qui permettent, lorsque l'abonnement d'un utilisateur comprend un service sélectionné, de décrypter les signaux audio et vidéo de ce service.

### Arrière-plan technologique de l'invention

Actuellement, lorsqu'un abonné souhaite souscrire un deuxième abonnement, et donc utiliser un deuxième décodeur de télévision numérique, il ne bénéficie pas généralement de tarifs avantageux de la part de l'opérateur auprès duquel il a souscrit son premier abonnement. Or il apparaît aujourd'hui qu'une proportion non négligeable des clients des opérateurs de télévision, qui ont souscrit un premier abonnement, dit abonnement principal, serait prête à souscrire un second abonnement, dit abonnement annexe, si ce dernier était proposé à un tarif avantageux par rapport au premier. Un double abonnement leur permettrait en effet de disposer de droits d'accès - éventuellement différents- pour plusieurs décodeurs de télévision qui, s'ils sont placés dans différentes pièces d'une habitation, permettraient à différentes personnes de l'habitation de visualiser simultanément des services de télévision payante différents.

Une des difficultés à laquelle se trouvent confrontés les différents opérateurs de télévision pour proposer des abonnements annexes à un abonnement principal à un tarif préférentiel est qu'ils doivent avoir la garantie que le décodeur esclave qu'ils mettent à disposition d'un abonné sera effectivement utilisé en tant que décodeur esclave, c'est à dire dans une habitation dans laquelle un décodeur maître est licitement utilisé. En effet, il ne serait économiquement pas viable de mettre à disposition du public des décodeurs bénéficiant d'un abonnement à tarif préférentiel si de tels décodeurs pouvaient être utilisés par une personne n'ayant pas déjà souscrit un abonnement.

Dans l'état de la technique, on connaît la demande de brevet Européen EP 0 726 676 déposée par Philips Electronics, qui apporte un début de solution au problème qui vient d'être soulevé. Dans ce document, on prévoit que, pour obtenir des droits d'accès, une carte de gestion des droits d'accès du décodeur esclave doit régulièrement être placée, par un abonné, dans le décodeur maître associé au décodeur esclave pour que les droits d'accès du décodeur esclave soient inscrits. Un tel fonctionnement est, en fonction de la fréquence imposée pour l'inscription des droits sur la carte de gestion des droits d'accès, soit contraignant pour l'abonné, le fait de recharger souvent la carte de contrôle devenant rapidement lassant, soit insuffisamment sécurisé, un utilisateur ami de l'abonné principal pouvant parfaitement venir recharger sa carte chez l'abonné principal aussi souvent que nécessaire, pour autant que la périodicité de rechargement maximum ne soit pas trop faible .

On connaît également, dans l'état de la technique, la demande de brevet JP2000-324465. Dans ce document, un décodeur maître transmet à un décodeur esclave qui lui est associé une clé de déchiffrement. Cette transmission est effectuée lors de la mise sous tension du décodeur esclave, ce qui implique notamment que le décodeur maître détecte une telle mise sous tension, le décodeur esclave devant donc être capable de communiquer au décodeur maître une information de mise en marche. Il faut donc équiper le décodeur maître et le décodeur esclave de moyens bidirectionels de communication pour qu'ils puissent échanger entre eux un ensemble d'informations. Un tel équipement est contraignant et coûteux à mettre en place. De plus, la clé de déchiffrement qui est transmise s'apparente à des droits d'accès qui sont donnés au décodeur esclave ;après la mise sous tension du décodeur esclave, et une fois les droits mémorisés, rien n'empêche un abonné de partir avec le décodeur maître vers une autre habitation pour transmettre les mêmes droits à un autre décodeur esclave.

Par ailleurs, on connaît dans l'état de la technique différents documents, par exemple la demande de brevet Européen EP 1 152 615, la demande de brevet Américain US 2003/0012380, ou encore le brevet américain US 6,195,642, qui décrivent une utilisation du modem, habituellement présent dans les décodeurs, pour échanger des informations entre un décodeur et un opérateur de télévision pour obtenir ou mettre à jour différents droits propres à un décodeur considéré. Mais ces documents ne se soucient pas de limiter conditionner l'utilisation d'un décodeur esclave à la présence, dans une même habitation, d'un décodeur maître.

### Description générale de l'invention

La présente invention propose une solution à tous les problèmes et inconvénients qui viennent d'être mentionnés. Dans l'invention, on propose une solution particulière qui rend impossible l'usage d'un décodeur esclave qui ne serait pas utilisé à proximité d'un décodeur maître. Un avantage significatif du procédé selon l'invention est que sa mise en oeuvre ne nécessite ni modifications matérielles dans les décodeurs intervenant dans ledit procédé, qu'ils soient maîtres ou esclaves, ni modifications du contenu des flux de signaux diffusés par les différents opérateurs de télévision.

A cet effet, on propose dans l'invention que le décodeur esclave communique avec le décodeur maître, par l'intermédiaire de leur modem, via une même ligne téléphonique, qui relie traditionnellement l'habitation dans laquelle sont installés les décodeurs au réseau RTC. Dans l'invention, un décodeur maître échange des informations de surveillance avec un ou plusieurs décodeurs esclaves pour garantir qu'ils sont connectés à la même ligne téléphonique, et qu'ils sont donc placés dans un même domicile. Les avantages d'une telle solution pour s'assurer qu'un décodeur maître et au moins un décodeur esclave sont utilisés dans une même habitation sont notamment les suivants :
- les modems utilisés font déjà partie intégrante des décodeurs ; il n'y a pas, dans l'invention, de développements matériels supplémentaires ;
- c'est une liaison locale qui est utilisée pour l'échange des informations de surveillance ; à l'exception de la ligne téléphonique parcourant le domicile, on ne fait pas appel au réseau RTC ; l'échange des informations de surveillance ne fait donc pas l'objet d'une facturation de la part de l'opérateur de téléphonie ;
- les clés de chiffrement, les mots de contrôle, ou toute autre information sensible en terme de sécurité et de confidentialité, intervenant dans les opérations de décryptage du flux transmis par les opérateurs de télévision et reçu par les décodeurs ne circulent pas, dans l'invention, entre les différents décodeurs intervenant, notamment via des liaisons supplémentaires externes au décodeur. Cet élément met en évidence la sécurité du procédé selon l'invention, et permet également d'éviter de subir différentes contraintes, notamment des contraintes d'opérations en temps réel, liées au désembrouillage d'émissions cryptées.

Par ailleurs, dans l'invention, on peut avantageusement prévoir un fonctionnement particulier de chaque décodeur esclave, fonctionnement selon lequel chaque décodeur esclave ne réalise pas d'opérations de décryptage tant qu'il n'a pas reçu de messages spécifiques, via la liaison téléphonique locale, de la part du décodeur maître.

Dans un mode de mise en oeuvre particulier du procédé selon l'invention, les décodeurs esclaves sont associés à un décodeur maître unique, c'est à dire qu'ils ne peuvent accepter de messages d'autorisation que de la part du décodeur maître qui leur a été affecté. A cet effet, les décodeurs esclaves et le décodeur maître auront fait l'objet d'une opération dite de pairing.

L'invention concerne donc un procédé de contrôle des conditions d'utilisation d'un décodeur de télévision, ledit procédé comportant les différentes étapes consistant à :
- équiper une habitation au moyen d'un décodeur maître et d'au moins un décodeur esclave , le décodeur maître et chaque décodeur esclave comportant notamment un modem;
- recevoir, dans le décodeur maître et chaque décodeur esclave, via des moyens de réception de l'habitation, un flux de signaux de télévision émis par un opérateur de télévision, le flux comportant notamment un ensemble de services de télévision ;
caractérisé en ce que le procédé comporte les différentes étapes supplémentaires consistant à :
- raccorder le décodeur maître et chaque décodeur esclave à une même ligne téléphonique de l'habitation ;
- échanger, via la ligne téléphonique et par l'intermédiaire des modems du décodeur maître et de chaque décodeur esclave, des informations de surveillance entre le décodeur maître et chaque décodeur esclave.

Le procédé selon l'invention peut avantageusement présenter une ou plusieurs caractéristiques supplémentaires parmi les suivantes :
- le procédé comporte l'étape supplémentaire consistant à, préalablement à l'échange des informations de surveillance, synchroniser le décodeur maître et chaque décodeur esclave ;
- la synchronisation du décodeur maître et de chaque décodeur esclave est réalisée au moyen d'informations temporelles obtenues dans le flux de signaux émis par l'opérateur de télévision ;
- l'échange d'informations de surveillance s'effectue pendant un intervalle de temps compris entre minuit et cinq heures du matin ;
- l'étape d'échange d'informations de surveillance est précédée par une procédure de connexion sur la ligne téléphonique consistant en :

- une opération de prise de ligne par le modem du décodeur maître et de chaque décodeur esclave ;
- une opération d'exécution, au moyen d'un modem appelant, d'une commande d'appel standard pour faire cesser une tonalité présente sur la ligne téléphonique après l'opération de prise de ligne ;
- le cas échéant, une opération d'exécution, au moyen d'un modem appelé, d'une commande de réponse forcée ;
- le modem appelant est le modem du décodeur maître ;
- l'opération d'exécution d'une commande de réponse forcée est effectuée tour à tour par chaque décodeur esclave ;
- les différentes opérations de la procédure de connexion respectent le protocole V23 ;
- le procédé comporte l'étape supplémentaire consistant à initialiser un mécanisme de temporisation, à chaque opération de prise de ligne par le modem appelant ou le modem appelé, pour libérer la ligne à la fin d'une durée de temporisation amorcée par le mécanisme de temporisation ;
- l'étape de libération de ligne est réalisée par l'exécution d'une opération de remise à zéro du modem ayant réalisé l'opération de prise de ligne ;
- le procédé comporte l'étape supplémentaire consistant à bloquer une opération de décryptage d'un ensemble de services de télévision pour chaque décodeur esclave actif n'ayant pas reçu au moins une information de surveillance pendant une durée d'autonomie, préalablement déterminée, des décodeurs esclaves ;
- les informations de surveillance circulent sur la ligne téléphonique de façon cryptée ;
- le procédé comporte l'étape supplémentaire consistant réaliser l'association du décodeur maître à chaque décodeur esclave de l'habitation.

L'invention et ses différentes applications seront mieux comprises à la lecture de la description qui suit et à l'examen des figures qui l'accompagnent.

### Brève description des figures

Celles-ci ne sont présentées qu'à titre indicatif et nullement limitatif de l'invention. Les figures montrent :
- à la figure 1, déjà décrite, une représentation schématique d'un décodeur classique de l'état de la technique ;
- à la figure 2, une représentation schématique de deux décodeurs susceptibles de mettre en oeuvre le procédé selon l'invention pour le contrôle des conditions d'utilisation d'un décodeur esclave;
- à la figure 3, une illustration schématique d'une procédure de connexion et d'échange d'informations susceptible d'intervenir dans le procédé selon l'invention ;
- à la figure 4, un organigramme illustrant différentes étapes d'un mode de mise en oeuvre particulier d'une opération de blocage d'un décodeur esclave.

### Description des formes de réalisation préférées de l'invention

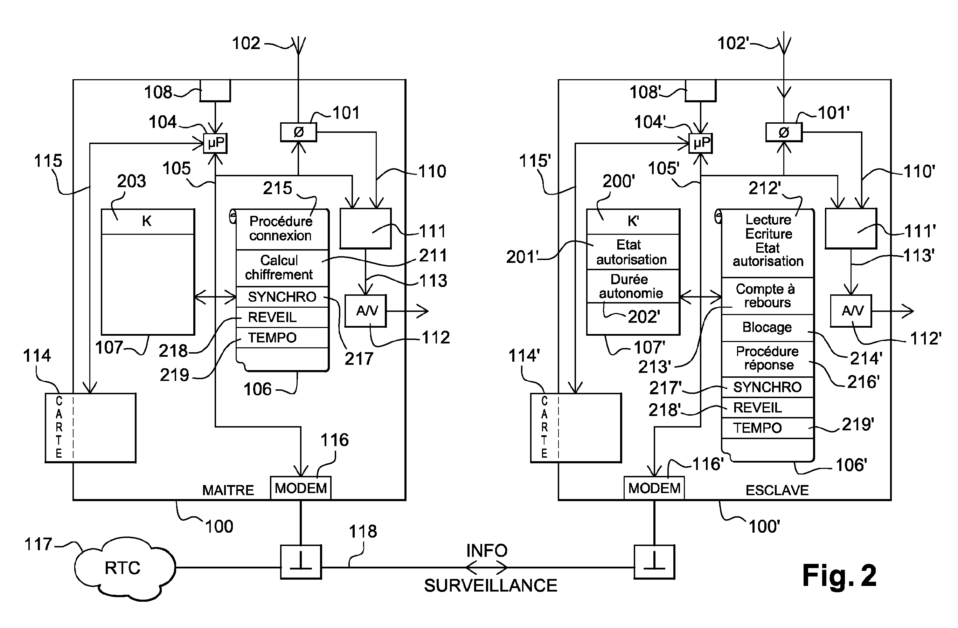

Il est désormais fait référence aux figures 2 à 4 qui illustrent une mise en oeuvre particulière de l'invention, plusieurs des étapes décrites ne devant en rien être considérées comme limitatives de la portée générale du procédé selon l'invention.

A la figure 2, on a représenté un premier décodeur 100, qui sera considéré comme le décodeur maître, et un deuxième décodeur 100', qui sera considéré comme un décodeur esclave. Ces deux décodeurs sont similaires, dans leur structure générale, à celui décrit à la figure 1 ; les différents éléments représentés ont gardé les mêmes références que celles données à la figure 1, l'extension "prime" ayant été ajoutée aux références du décodeur 100' pour éviter les confusions. Pour la mise en oeuvre du procédé selon l'invention, on a essentiellement adapté, par rapport aux décodeurs connus de l'état de la technique, le contenu des mémoires de programmes 106, 106' et le contenu des mémoires de données 107 et 107'. Les deux décodeurs sont reliés à des moyens de réception, par exemple de type antenne 102 et 102', par l'intermédiaire desquels ils reçoivent un flux de signaux transmis par un opérateur de télévision.

Le décodeur maître 100 et le décodeur esclave 100' sont reliés par l'intermédiaire de leur modem respectif 117 et 117' à une ligne téléphonique 118 unique de l'habitation dans laquelle ils sont disposés. Ils bénéficient ainsi d'une liaison physique locale à l'habitation qui peut leur permettre d'échanger des données, et notamment des informations de surveillance. Pour échanger de telles informations, on privilégie, dans l'invention, la mise en oeuvre d'une procédure de connexion particulière. Celle-ci peut notamment être gérée par une application spécifique 215, dite application de procédure de connexion, de la mémoire de programmes 106, application que l'on retrouve dans le décodeur renfermant le modem appelant, c'est à dire celui qui initie un échange d'informations. Dans le décodeur abritant le modem appelé, on définit une application spécifique 216', dite application de réponse, qui permet de recevoir les informations émises par le modem appelant, et le cas échéant d'y répondre et de les exploiter. Dans l'exemple décrit, le modem appelant est le modem 116 du décodeur maître 100. Mais dans d'autres exemples de mise en oeuvre, le modem appelant peut être le modem 116 de chaque décodeur esclave.

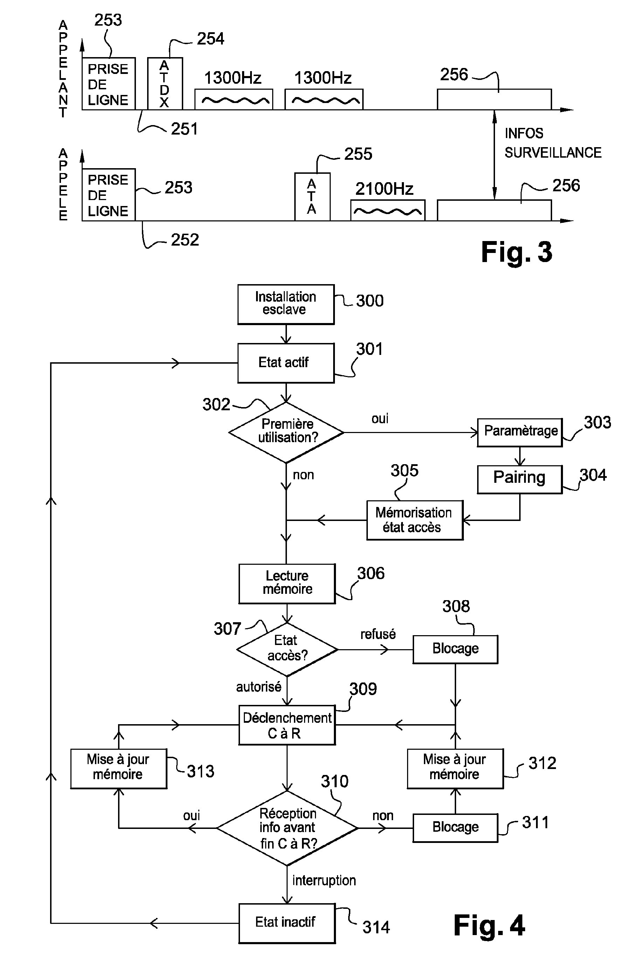

La figure 3 illustre un exemple de déroulement d'opérations mises en oeuvre pour permettre un échange d'informations entre le décodeur maître 100 et le décodeur esclave 100' via la ligne téléphonique 118 et par l'intermédiaire de leur modem respectif 116 et 116'. Sur cette figure, on a représenté un premier chronogramme 251, illustrant les opérations effectuées par le décodeur appelant 100, et un deuxième chronogramme 252, illustrant les opérations effectuées par le décodeur appelé 100'. Les opérations décrites par la suite respectent, à titre d'exemple, le protocole V23, connu de l'homme du métier. Tout autre protocole peut évidemment s'appliquer aux modems 116 et 116', en utilisant des opérations équivalentes à celles qui vont être précisées.

Dans un premier temps, quasi simultanément, grâce à des applications 217 et 217', dites applications de synchronisation, des mémoires de programmes 106 et 106', le modem appelant 116 envoie une commande d'appel standard de type ATDX 254, où X est un numéro d'appel fictif qui permet de faire cesser l'émission de l'IAN (tonalité d'Invitation A Numéroter envoyée par le réseau RTC 117), et le modem appelé exécute une commande de réponse forcée 255, de type ATA.

L'exécution de la commande ATDX par le modem appelant entraîne, après la prise de ligne et l'envoi du numéro (X), l'émission d'un signal à 1300 Hz (Hertz), cadencé, de la part du modem appelant.

L'exécution de la commande ATA par le modem appelé entraîne, après la prise de ligne , l'émission d'un signal à 2100 Hz, pendant environ 3s, puis l'émission de sa porteuse à 1300Hz . Une fois que le modem appelant a reçu la réponse forcée de la part du modem appelé, il envoie à son tour sa porteuse 390 Hz ; dés lors, un échange d'informations 256 peut débuter.

Les informations échangées consistent essentiellement, voire uniquement, en la transmission depuis le modem appelant vers le modem appelé, d'une information de surveillance. La transmission d'une telle information peut par exemple se faire de façon cryptée. La réception d'une telle information valide une autorisation de fonctionnement du décodeur esclave, qui peut alors fonctionner normalement, en ayant la capacité de décoder l'ensemble des services de télévision pour lequel il a licitement acquis des droits. La réception de l'information de surveillance est éventuellement, selon différents exemples de mise en oeuvre du procédé selon l'invention, suivie d'un message d'accusé de réception transmis depuis le modem appelé vers le modem appelant. Dans le cas contraire, c'est à dire si le décodeur esclave ne reçoit pas d'information de surveillance, on peut décider de bloquer le fonctionnement du décodeur esclave 100'. Un exemple particulier de mise en oeuvre d'une décision de blocage d'un décodeur esclave sera détaillé en référence à la figure 4.

Le réseau RTC 117 prévoit l'émission d'une cadence d'occupation, dite cadence BUSY, si aucune communication n'est engagée à travers le réseau RTC dans un délai inférieur à la minute suite à l'opération de prise de ligne 253. Bien que l'échange d'informations entre le modem appelant 116 et le modem appelé 116' puisse se faire en présence de la cadence BUSY (d'une part parce que la perte en ligne entre les deux modems est négligeable car l'échange d'informations se fait sur une liaison locale, et d'autre part parce que les fréquences des signaux échangés entre le modem appelant et le modem appelé et la fréquence de la cadence BUSY sont éloignées), on envisage, dans certains modes de mise en oeuvre du procédé selon l'invention, de passer les commandes d'appel standard ATD et de réponse forcée ATA dans un délai limité, notamment pour restreindre la durée d'occupation de la ligne téléphonique 118. En conséquence, une opération de synchronisation des modems doit être effectuée.

Une telle opération est essentiellement réalisée au moyen des applications de synchronisation 217 et 217' des mémoires de programmes 106 et 106'. Un moyen proposé dans l'invention pour réaliser la synchronisation du décodeur maître 100 et de chaque décodeur esclave 100' est de récupérer une information temporelle, donnant notamment l'heure, contenue dans le flux diffusé par l'opérateur de télévision, et reçu par les moyens de réception 102 et 102'. Les différents décodeurs recevant le même flux, les modems peuvent se connecter avec précision. Une application spécifique 218 et 218', dite application de réveil, des mémoires de programmes 106 et 106', permet aux différents décodeurs intervenant de sortir d'un état de veille, dans l'hypothèse où ils seraient dans un tel état, pendant un créneau horaire préalablement déterminé, de préférence la nuit, et désigné comme fenêtre de rendez-vous, pendant lesquels leur modem effectue, à un instant précis également préalablement déterminé, les procédures de connexion.

Dans le cas où un décodeur maître est associé à plusieurs décodeurs esclaves, les modems des différents décodeurs esclaves effectuent tour à tour leur procédure de connexion, le modem du décodeur maître devant effectuer la procédure de connexion autant de fois qu'il existe de décodeurs esclaves qui lui sont associés.

Afin de bien maîtriser une durée d'occupation de la ligne téléphonique 117, un dispositif de temporisation est initialisé par chaque décodeur à chaque prise de ligne par le modem associé au décodeur considéré. Une application spécifique 219 et 219', dite application de temporisation, des mémoires de programmes 106 et 106' est prévue à cet effet. Elle garantit le relâchement de la ligne téléphonique 118 par chacun des modems ayant effectué une prise de ligne. A cet effet, elle peut par exemple utiliser une commande matérielle de remise à zéro, généralement appelée "reset".

On se réfère à présent essentiellement à la figure 4. L'organigramme qui y est représenté comporte une première étape 300 consistant en l'installation d'un décodeur esclave. Par installation, on désigne ici l'ensemble des opérations de raccordement au secteur, aux moyens de réception 103, et tout autre branchement du décodeur esclave. Une fois convenablement connecté, le décodeur esclave peut, dans une étape 301, être mis dans un état actif, à opposer à un état de veille dans lequel le décodeur ne tente pas de réaliser d'opérations de décryptage.

Une étape de décision 302 intervient alors, étape dans laquelle l'utilisateur indique s'il s'agit d'une première utilisation du décodeur esclave. Si c'est le cas, l'utilisateur a la possibilité d'accéder à un menu qui s'affiche sur l'écran de son téléviseur; simultanément, l'utilisateur affiche un menu similaire sur un deuxième écran associé au décodeur maître. L'apparition de ces menus, qui, dans un mode de mise en oeuvre particulier peut être limitée à la seule première utilisation du décodeur esclave, permet de paramétrer, dans une étape 303, un ensemble de fonctionnalités du décodeur esclave, et également de procéder, dans une étape 304, à une opération d'association, ou pairing, entre le décodeur maître et le décodeur esclave. Cette opération de pairing sera détaillée ultérieurement dans les différentes variantes qui peuvent être envisagées dans l'invention. Dans tous les cas envisagés, l'opération de pairing aboutit à la mémorisation, dans une zone particulière 203 de la mémoire de données 107, respectivement 200' de la mémoire de données 107', d'une clé de chiffrement K, respectivement d'une clé de déchiffrement K'.

La clé de déchiffrement K' permet de déchiffrer l'ensemble des messages chiffrés au moyen de la clé de chiffrement K. Ces clés peuvent notamment être utilisées pour que l'information de surveillance soit transmise de façon cryptée du décodeur maître vers chaque décodeur esclave destinataire. Ces clés, en fonction des algorithmes de cryptage utilisés, sont différentes ou identiques et seuls les décodeurs esclaves pourvus de la bonne clé de déchiffrement K' peuvent décoder le message d'autorisation codé au moyen de la clé de chiffrement K, et l'interpréter comme tel.

Après l'opération de pairing, on effectue une opération 305 de première mémorisation, dans une zone particulière 201' de la mémoire de données 107' du décodeur esclave, d'un état d'autorisation d'accès à des services de télévision. Par défaut, à l'issue de l'opération de pairing 304, l'accès est autorisé.

A l'issue de l'étape 305, ou à l'issue de l'étape 302 lorsque le décodeur n'est pas mis dans un état actif pour la première fois, on procède, dans une étape 306, à une opération de lecture de l'état d'autorisation d'accès aux services de télévision. Les opérations de lecture/écriture de l'état d'autorisation d'accès sont effectuées au moyen d'une application 212' de la mémoire de programmes 106'. Cette étape de lecture est suivie d'une étape de décision 307 suite à laquelle le décodeur esclave est mis, dans une étape 308, dans un état de blocage lorsque l'accès aux services de télévision est mémorisé comme refusé ; le fonctionnement de l'étape de blocage 308, comme celui des autres étapes de blocage pouvant intervenir, sera détaillé par la suite.

A l'issue de l'étape 308, ou de l'étape de décision 307 lorsque l'accès aux services de télévision est mémorisé comme autorisé, notamment quand l'information de surveillance a été reçue avec succès par le décodeur esclave considéré, on procède, dans une étape 309, au déclenchement d'un compte à rebours, ou timer, au moyen d'une application 213' de la mémoire de programmes 106'. A partir du moment où le timer est déclenché, le décodeur esclave est en attente de la réception de l'information de surveillance. Une étape de décision 310 illustre cette attente.

Si le compte à rebours est achevé, c'est à dire si une durée dite durée d'autonomie, mémorisée dans une zone particulière 202' de la mémoire de données 107' du décodeur esclave, est écoulée depuis le déclenchement du compte à rebours, et si aucune information de surveillance adéquate n'est parvenue au décodeur esclave, ce dernier est mis dans un état de blocage dans une étape 311 ; l'état d'autorisation d'accès aux services de télévision pour lesquels le décodeur esclave a acquis les droits est alors mémorisé comme refusé, dans une étape 312, dans la zone de mémoire réservée à cet effet. A l'inverse, si la durée d'autonomie du décodeur esclave n'est pas arrivée à son terme lors de la réception de l'information de surveillance, l'état d'accès aux services de télévision pour lesquels le décodeur esclave a acquis les droits est mémorisé, dans une étape 313, comme autorisé dans la zone de mémoire 201' réservée à cet effet. Dans les deux cas, c'est à dire à l'issue de l'étape 312 ou à l'issue de l'étape 313, le procédé est repris à l'étape 309 où le compte à rebours est déclenché. Dans l'hypothèse où les applications de réveil 218 et 218' ne sont pas mises en oeuvre, on pourra également compter le nombre de sorties de veille réalisées depuis la dernière réception de l'information de surveillance et faire passer l'état d'autorisation d'accès mémorisé dans l'état refusé, lorsque ce nombre dépassera une certaine valeur (par exemple 5).

La mémorisation d'un état d'autorisation d'accès permet d'éviter une fraude consistant à mettre en veille et à remettre dans un état actif, immédiatement après, un décodeur esclave qui n'aurait pas reçu dans les temps l'information de surveillance et dont les fonctionnalités de décryptage auraient été bloquées. En effet, si une telle information n'était pas mémorisée, chaque nouvelle mise en activité d'un décodeur esclave permettrait d'obtenir un flux de signaux décryptés pendant la totalité de la durée d'autonomie du décodeur esclave. Le fait de reprendre le procédé à l'étape 309 à l'issue des étapes 311 et 312 permet de limiter les conséquences d'une perturbation dans la transmission de l'information de surveillance. Ainsi, dans le cas où la non réception de l'information de surveillance relève d'un dysfonctionnement, le décodeur esclave licitement utilisé ne sera bloqué que jusqu'à la réception de l'information de surveillance suivante.

A tout moment, l'étape de décision 310 peut être interrompue par l'utilisateur qui décide, dans une étape 314, de placer le décodeur esclave dans un état de veille. Le procédé selon l'invention est alors repris à l'étape 301 lorsque l'utilisateur replace le décodeur esclave dans un état actif.

Pour l'étape d'association 304, deux alternatives principales sont envisagées dans le procédé selon l'invention :
La première est dite pairing local. Dans cette alternative, le décodeur maître calcule, au moyen d'une application dite de calcul de chiffrement 211 de la mémoire de programmes 106, la clé de chiffrement K, par exemple de type AES, à partir d'aléas à sa disposition, tels que l'heure, le niveau de remplissage de ses mémoires tampons.... Après l'avoir mémorisée, il transmet à chaque décodeur esclave la clé de déchiffrement correspondante K', où elle est mémorisée de façon unique et irréversible, rendant ainsi définitivement impossible l'utilisation de ces décodeurs esclaves avec un autre décodeur maître.
La deuxième alternative est dite pairing centralisé. Dans cette alternative, l'opérateur de télévision émet des messages d'administration de droits de type EMM (Entitlement Management Message en anglais) spécifiques, destinés à un couple maître/esclave d'un même abonné, contenant les clés de chiffrement K et de déchiffrement K'. Le ou les messages EMM chiffrés portant les clés peuvent, par soucis de sécurité, comporter le numéro de série des décodeur maître et esclave.

Pour les étapes de blocage 308 et/ou 311, deux alternatives principales sont également envisagées dans le procédé selon l'invention :
La première alternative est appliquée lorsque les cartes de gestion des droits 114 et 114' sont identiques en terme de fonctionnement (pas nécessairement en terme de services auxquels elles donnent accès). Dans ce cas, une application de blocage 214' de la mémoire de programmes 106' est déclenchée dans les différentes étapes de blocage. Elle a pour effet d'empêcher la transmission des mots de décryptage depuis la carte de gestion de droits d'accès 114' vers le module de décryptage 111'.
Dans la deuxième alternative, les cartes de gestion des droits 114 et 114' ne sont pas identiques. On prévoit alors d'élaborer les messages d'autorisation du maître non plus dans sa mémoire de programme 106, mais dans sa carte de gestion des droits 114. Ce sont alors les cartes de gestion des droits 114' des décodeurs esclaves qui peuvent directement bloquer les opérations de décryptage. Dans cette deuxième alternative, on utilisera avantageusement le pairing centralisé, des EMM spécifiques transmettant, aux cartes de gestion des droits des décodeurs maîtres et esclaves, la clé commune dans le cas d'un chiffrement symétrique, ou les deux clés, dans le cas d'un chiffrement RSA.

## Revendications

1. Procédé de contrôle des conditions d'utilisation d'un décodeur de télévision, ledit procédé comportant les différentes étapes consistant à :
- équiper une habitation au moyen d'un décodeur maître (100) et d'au moins un décodeur esclave (100'), le décodeur maître et chaque décodeur esclave comportant notamment un modem (116 ;116');
- recevoir, dans le décodeur maître (100) et chaque décodeur esclave (100'), via des moyens de réception (103 ;103') de l'habitation, un flux de signaux de télévision émis par un opérateur de télévision, le flux comportant notamment un ensemble de services de télévision ;
- raccorder le décodeur maître (100) et chaque décodeur esclave (100') à une même ligne téléphonique (118) de l'habitation ;
- échanger, via la ligne téléphonique (118) et par l'intermédiaire des modems (116 ;116') du décodeur maître (100) et de chaque décodeur esclave (100'), des informations de surveillance entre le décodeur maître (100) et chaque décodeur esclave (100') ;
**caractérisé en ce que**
- l'étape d'échange d'informations de surveillance est précédée par une procédure de connexion sur la ligne téléphonique consistant en :
- une opération de prise de ligne (253) par le modem (116) du décodeur maître (100) et de chaque décodeur esclave (100');
- une opération d'exécution, au moyen d'un modem appelant, d'une commande d'appel standard (254) pour faire cesser une tonalité présente sur la ligne téléphonique (118) après l'opération de prise de ligne (253);
- le cas échéant, une opération d'exécution, au moyen d'un modem appelé, d'une commande de réponse forcée (255) ;
- les différentes opérations de la procédure de connexion respectant le protocole V23.

2. Procédé selon la revendication précédente **caractérisé en ce qu'**il comporte l'étape supplémentaire consistant à, préalablement à l'échange des informations de surveillance, synchroniser le décodeur maître (100) et chaque décodeur esclave (100').

3. Procédé selon la revendication précédente **caractérisé en ce que** la synchronisation du décodeur maître (100) et de chaque décodeur esclave (100') est réalisée au moyen d'informations temporelles obtenues dans le flux de signaux émis par l'opérateur de télévision.

4. Procédé selon l'une au moins des revendications précédentes **caractérisé en ce que** l'échange d'informations de surveillance s'effectue pendant un intervalle de temps compris entre minuit et cinq heures du matin.

5. Procédé selon la revendication précédente **caractérisé en ce que** le modem appelant est le modem du décodeur maître (100).

6. Procédé selon la revendication précédente **caractérisé en ce que** l'opération d'exécution d'une commande de réponse forcée (255) est effectuée tour à tour par chaque décodeur esclave (100').

7. Procédé selon l'une au moins des revendications précédentes **caractérisé en ce qu'**il comporte l'étape supplémentaire consistant à initialiser un mécanisme de temporisation, à chaque opération de prise de ligne par le modem appelant ou le modem appelé, pour libérer la ligne (118) à la fin d'une durée de temporisation amorcée par le mécanisme de temporisation.

8. Procédé selon la revendication précédente **caractérisé en ce que** l'étape de libération de ligne (118) est réalisée par l'exécution d'une opération de remise à zéro du modem ayant réalisé l'opération de prise de ligne.

9. Procédé selon l'une au moins des revendications précédentes **caractérisé en ce qu'**il comporte l'étape supplémentaire consistant à bloquer une opération de décryptage d'un ensemble de services de télévision pour chaque décodeur esclave (100') actif n'ayant pas reçu au moins une information de surveillance pendant une durée d'autonomie, préalablement déterminée, des décodeurs esclaves (100').

10. Procédé selon l'une au moins des revendications précédentes **caractérisé en ce que** les informations de surveillance circulent sur la ligne téléphonique (118) de façon cryptée.

11. Procédé selon l'une au moins des revendications précédentes **caractérisé en ce qu'**il comporte l'étape supplémentaire consistant à réaliser l'association du décodeur maître (100) à chaque décodeur esclave (100') de l'habitation.
